# EUROPEAN PATENT APPLICATION

(11) **EP 1 808 069 A1**
(43) Date of publication of application: **18.07.2007**
(21) Application number: 07100551.6
(22) Date of filing: 15.01.2007
(51) Int. Cl.: A01K 5/01, A01K 7/00

(54) **Feed trough and method for making a feed trough**

(30) Priority: 15.01.2006 DK 200600061
(71) Applicant: Polyflex ApS, 7480 Vildbjerg (DK)
(72) Inventor: Sørensen, Villy Juhl, 7430, Ikast (DK)
(74) Representative: Nielsen, Leif

(57) **Abstract**

A feed trough 1 for livestock, preferably pigs, is provided with a supply pipe for water 3 and a supply pipe 4 for feed. In order to achieve simple manufacture of a cleaning-friendly trough, the trough 1 is made of polymeric concrete, and the supply pipes 3, 4 are embedded in the wall 2 of the trough. The pipes extend to the inner surface 11 of the wall, and extend to a position immediately above the top side 8 of the wall 2. Here, the supply pipes will be connected to installations in the stable where the troughs are used.

## Description

### Field of the Invention

The present invention concerns a feed trough for livestock, where the feed trough includes supply pipes for feed and water.

Furthermore, the present invention concerns a method for making a feed trough for livestock, where the feed trough includes supply pipes for feed and water.

### Background of the Invention

It has been known for many years to make feed troughs for livestock, preferably pigs, with supply pipes for water and feed. The supply pipes for feed can be intended for supplying wet or dry feed.

It is known to apply these pipes on metal troughs by welding the supply pipes on the wall of the trough by means of fittings or similar. Alternatively, it has been known to fasten the pipes to a sty partitioning which has been provided in immediate connection to the trough, as separate sty partitioning or as a partitioning which is integrated with the trough.

Furthermore, with cast troughs of concrete it is known to fasten the pipes to the wall of the trough by means of fittings fastened in the wall of the trough. Such fittings may be fastened by means of anchor means in the form of screws, or anchoring elements may be embedded in the fitting.

In recent years, an increased use of polymeric concrete for making troughs has been experienced, as polymeric concrete has advantageous properties.

Until now, the supply pipes have been fastened in troughs of polymeric concrete by means of fittings that are fastened in the wall of the trough.

Such fastening is to be made separately, which is disadvantageous, and furthermore mounting by means of fittings will not be very cleaning-friendly, which is unsuitable as great demands are made to cleaning and hygiene in modem stables.

### Object of the Invention

It is the purpose with the present invention to indicate a trough of the kind indicated in the introduction where the drawbacks are relieved, producing a trough which is very easy to mount and at the same time is cleaning-friendly.

### Description of the Invention

This purpose is achieved with a feed trough of the type mentioned in the introduction which is peculiar in that the trough is cast in polymeric concrete, and that the supply pipes are embedded in the wall of the trough and extend to the interior of the trough. The method according to the invention is peculiar in that the trough is cast in polymeric concrete, and that the supply pipes are embedded in the wall of the trough and extend to the interior of the trough.

Surprisingly, it has appeared that it is possible to cast supply pipes for feed and water in troughs made of polymeric concrete. It has appeared that the common assumption that polymeric concrete shrinks during the setting, forming cracks that make the thin wall in the trough crack, does not prove correct.

According to an embodiment of the invention, the trough is peculiar in that at least the outer side of the supply pipes is made of an elastic material. The risk of crack formation in connection with the setting of the polymeric concrete will thus be reduced, even when the supply pipes have larger diameter, as is e.g. the case with feed supply pipes and in particular pipes used in connection with wet feed.

According to a further embodiment, it is preferred that the supply pipes are made of plastic.

It has appeared that pipes with lesser diameter which are used for supplying water can be made of metal when they have a small diameter. In a particular embodiment, this diameter will be less than 30 mm. Normally, the supply pipes for feed will have larger diameter. The feed supply pipes may thus have an outer diameter which is greater than 30 mm. In these cases it is preferred that at least the outer side of the feed supply pipes is made of an elastic material. Alternatively, the feed supply pipe can be made of plastic.

By making the trough according to the invention, it has appeared feasible to make the feed supply pipe with a very limited wall thickness around the pipes. In order to avoid uniform wall thickness in the whole trough, it is preferred that the wall thickness of the trough is only increased in the part of the wall where the supply pipes are embedded. In this situation, the trough can be provided with a first and a second increased wall thickness, where a first increased wall thickness is less than the second increased wall thickness in the area where water pipes with lesser diameter are embedded. The second region of the trough will thus have a greater wall thickness in the area where the pipe is embedded. A limited wall thickness thereby appears, and the amount of polymeric concrete is limited around the embedded supply pipes, which is advantageous with regard to cooling time and setting time.

According to a special embodiment, the trough according to the invention is peculiar in that the upper end of the feed supply pipe extends largely vertically from above and down into the wall of the trough, and that the lower end of the feed supply pipe extends with an oblique angle between 15° and 60° in relation to vertical from a position inside the wall to a position at the inner surface of the wall. It is particularly important that the feed supply pipe extends under an oblique angle so that no feed accumulates at the bottom of the feed supply pipe. The lower part of the feed supply pipe may thus extend curving, or alternatively, the lower end may be shaped as two rectilinear parts, of which the lower part extends obliquely in relation to the upper part which extends largely vertically.

Even if the lower end of the feed supply pipe can be disposed at various inclining angles, it is preferred in a particularly advantageous embodiment that the oblique angle is about 45° in relation to vertical.

In order to make a trough which is easy to handle, it is preferred that the supply pipes only extend to a position immediately above the top side of the trough wall.

It is noted that the lower end of the supply pipes is terminated at the inner surface of the end wall. The supply pipes will thus abut on the mould wall used in casting the interior of the trough. With regard to the cleaning-friendliness, this is an advantage, as there will be no protruding parts from the inner surface of the wall of the trough where impurities can attach. It is preferred to provide the pipe ends extending to a position above the top side of the trough wall with connecting means in the form of threading or similar, in order to obtain connection to installations for supply of water and feed to the supply pipes made integral with the trough.

At the lower end, the water supply pipe will preferably be provided with an internal thread to which a water valve known per se can be screwed on.

It has appeared suitable that a rapid stripping of the trough with embedded supply pipes is performed in order to achieve a construction where the risk of crack formation is minimal.

### Description of the Drawing

In the following, the invention will be explained in more detail with reference to the enclosed drawing showing an embodiment example of a trough according to the invention, and wherein:
- Fig. 1: shows a perspective partial view of the trough, viewed from the interior of the trough;
- Fig. 2: shows a perspective partial view of the trough, viewed from above;
- Fig. 3: shows two sectional views through side wall of trough according to the invention.

### Detailed description of the invention

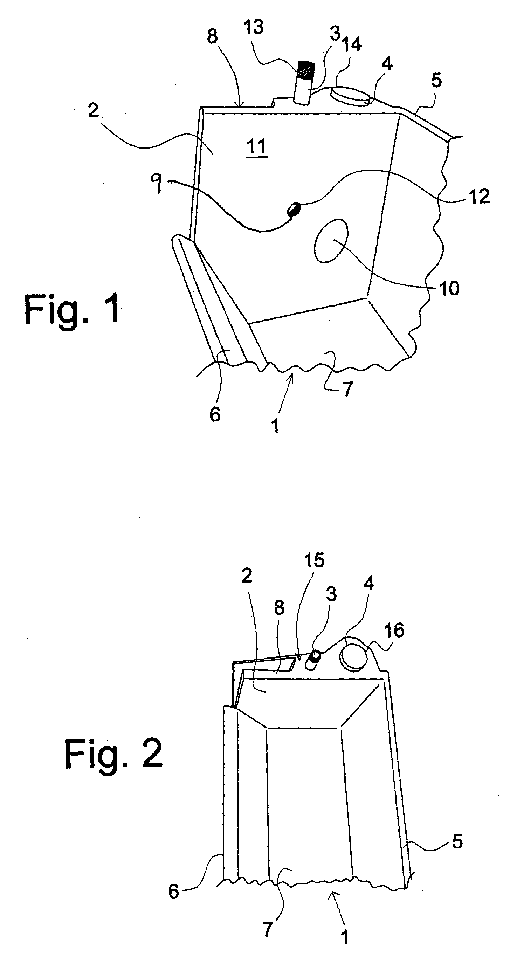

In Fig. 1 is illustrated a trough 1 with a sidewall 2 in which is embedded a water supply pipe and a feed supply pipe 4. In addition to the sidewall 2, the trough is provided with further walls, of which one wall 5 and a wall 6 intended to be closest to the animal, are shown. Furthermore, the trough 1 has a bottom 7.

As it particularly appears from Fig. 1, it is seen that the supply pipes 3, 4 terminate close to a position immediately above a top side 8 of the wall 2 of the trough. Moreover, it appears that a lower end 9, 10 of the supply pipes terminate at an inner surface 11 of the wall 2. It appears that the water supply pipes are provided at the lower end with an internal thread 12, and provided with an external thread 13 at the upper end. The thread 12 is intended for screwing on a drinking valve, and the thread 13 is intended for connecting the water supply pipe 3 with water installations in the stable. The water supply pipe 3 is made of metal.

The feed supply pipe 4 has an upper end 14 that just extend some millimetres above the top side 8 of the wall 2. The upper end 14 is adapted to fasten installations in the stable where the troughs are used for conducting dry feed or wet feed to the trough 1.

As it particularly appears from Fig. 2, the walls 2, 5, 6 of the trough is made with largely uniform thickness, except the area where the supply pipes 3, 4 are embedded. It appears that a first wall part 15 and a second wall 16 are provided, where the second wall part 16 is thicker around the feed supply pipe which has greater diameter than the diameter of the water supply pipe 3.

In the shown embodiment, the feed supply pipe 4 is made of plastic, but alternatively it will be possible to make the feed supply pipe 4 of other materials when only the outer side of the feed supply pipe is made of an elastic material. In practice, it has appeared that the water supply pipe 3, due to the limited diameter, does not need an outer side made of an elastic material.

In Figs. 1 and 2 there is no illustration of the course of the feed supply pipe 4 and the water supply pipe 3 inside the side wall 2. However, it is to be noted that at the lower end, the water supply pipe 3 is provided with a 90° angle bend which is connected to a vertical pipe section.

At its lower end, the feed supply pipe is provided with a curvature which varies depending on whether the trough is to be used for wet-feeding or dry-feeding.

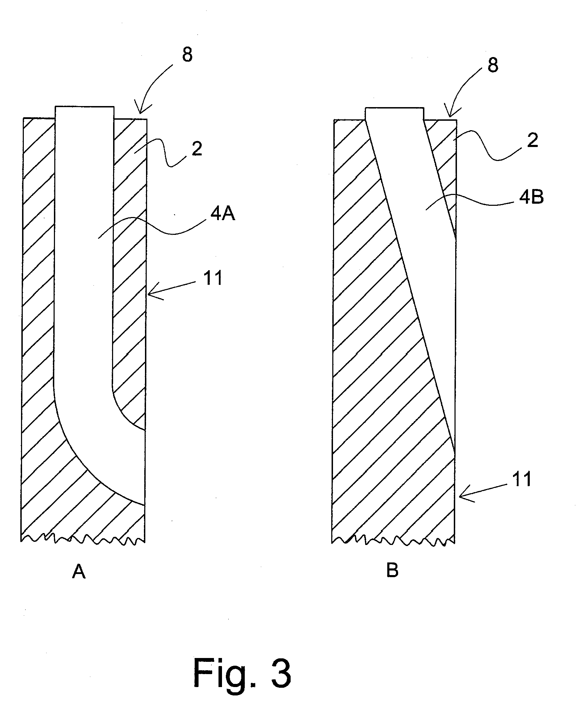

In Fig. 3 sectional view A presents a trough 1 with feed supply pipe 4A for wet-feeding and which has a curving extension so that the lower end extend with an angle of about 45° in relation to vertical. In Fig. 3 sectional view B presents a trough with feed supply pipe 4B for dry-feeding and which has a largely rectilinear extension so that the lower end extend with an angle of about 15° in relation to vertical.

By wet-feeding, the feed supply pipe 4 will keep itself clean, as the regular throughflow prevents depositing and thereby risk of bacteria growth in the pipe.

By dry-feeding, it is important that there is a largely straight flow down into the interior of the trough in order to avoid deposits in the supply pipe. Usually, the feed supply pipe will open op slightly higher on the wall 2 of the trough as compared with wet-feeding, in order to avoid moisture in the pipe. By using a largely rectilinear pipe and cutting it obliquely, a high feeding area is attained which contributes to prevent accumulation and thereby the risk of bacteria growth in the pipe.

## Claims

1. A feed trough for livestock, where the feed trough includes supply pipes for feed and water, **characterised in that** the trough is made of polymeric concrete and the supply pipes are cast into the wall of the trough and extend to the inner surface of the wall.

2. Trough according to claim 1, **characterised in that** at least the outer side of the supply pipes is made of an elastic material.

3. Trough according to claim 1 or 2, **characterised in that** the supply pipes are made of plastic.

4. Trough according to claim 1, **characterised in that** the supply pipe for water is of metal and has an outer diameter which is less than 30 mm, and the supply pipe for feed has an outer diameter which is greater than 30 mm, and that at least the outer side of the feed supply pipe is made of an elastic material.

5. Trough according to claim 4, **characterised in that** the feed supply pipe is made of plastic.

6. Trough according to any preceding claim, **characterised in that** the upper end of the feed supply pipe extends largely vertically from above and down into the wall of the trough, and that the lower end of the feed supply pipe extends with an oblique angle between 15° and 60° in relation to vertical from a position inside the wall to a position at the inner surface of the wall.

7. Trough according to claim 6, **characterised in that** the lower end of the feed supply pipe extends with an oblique angle of about 45° relative to vertical.

8. Trough according to any preceding claim, **characterised in that** the supply pipes only extend to a position immediately above the top side of the trough wall.

9. A method for making a feed trough for livestock, where the feed trough includes supply pipes for feed and water, **characterised in that** the trough is cast in polymeric concrete, and that the supply pipes are embedded in the wall of the trough and extend to the inner surface of the wall.

10. Method according to claim 9, **characterised in that** a rapid stripping of the trough with embedded supply pipes is performed.
